# EUROPÄISCHE PATENTSCHRIFT

(11) **EP 1 012 206 B1**
(45) Veröffentlichungstag und Bekanntmachung des Hinweises auf die Patenterteilung: **14.11.2001**
(21) Anmeldenummer: 98945271.9
(22) Anmeldetag: 20.08.1998
(51) Int. Cl.: C08J 9/18

(54) **VERFAHREN ZUR HERSTELLUNG VON EXPANDIERTEN POLYOLEFIN-PARTIKEL N**
METHOD FOR PRODUCING EXPANDED POLYOLEFIN PARTICLES
PROCEDE DE PRODUCTION DE PARTICULES DE POLYOLEFINE EXPANSEES

(30) Priorität: 26.08.1997 DE 19737002
(43) Veröffentlichungstag der Anmeldung: 28.06.2000
(73) Patentinhaber: BASF AKTIENGESELLSCHAFT, 67056 Ludwigshafen (DE)
(72) Erfinder: BRAUN, Frank, D-67063 Ludwigshafen (DE); HAHN, Klaus, D-67281 Kirchheim (DE); LEIBACH, Manfred, D-67065 Ludwigshafen (DE); KÖGEL, Wolfram, D-68309 Mannheim (DE); DE GRAVE, Isidoor, D-67157 Wachenheim (DE)
(86) Internationale Anmeldenummer: EP9805295
(87) Internationale Veröffentlichungsnummer: WO9910419

(56) Entgegenhaltungen:
- US-A- 4 704 239

## Beschreibung

Die Erfindung betrifft ein Verfahren zur Herstellung von expandierten Polyolefin(EPO) -Partikeln durch Imprägnieren von Polyolefin-Granulat mit einem flüchtigen Treibmittel in Suspension unter Druck bei erhöhter Temperatur.

Das genannte Verfahren ist an sich bekannt und wird in großtechnischem Maßstab betrieben. Nach EP-A 53 333 und EP-A 123 144 werden als Treibmittel organische Verbindungen, wie Halogenkohlenwasserstoffe, z.B. Dichlordifluormethan, oder Kohlenwasserstoffe, z.B. Butan eingesetzt, das Suspensionsmedium ist Wasser. In verschiedenen Druckschriften, z.B. EP-A 164 855, EP-A' 429 091, EP-A 464 619 und DE-A 34 31 245 wird erwähnt; daß außer dem bevorzugten Suspensionsmedium Wasser auch Mischungen von Wasser mit organischen Flüssigkeiten, wie Methanol oder Ethanol eingesetzt werden können. Stets enthält die Suspension aber einen Suspensionsstabilisator, der auch als Dispergierhilfsmittel bezeichnet wird. Dieser soll verhindern, daß die Polyolefinteilchen in der Suspension zusammenbacken bzw. agglomerieren. Geeignete Suspensionsstabilisatoren sind wasserunlösliche anorganische Verbindungen, wie Metallcarbonate, -phosphate oder -oxide, die gegebenenfalls zusammen mit oberflächenaktiven Substanzen; wie z.B. Sulfonaten oder Ethoxylaten eingesetzt werden. Die Mengen liegen im allgemeinen zwischen 0,1 und 10 Gew.-%, bezogen auf das Polyolefin. Nach beendeter Imprägnierung gelangen diese Hilfsmittel teilweise ins Abwasser; zum Teil haften sie auch an den EPO-Partikeln. Damit diese zu Formteilen verschweißt werden konnen, müssen die anhaftenden anorganischen Substanzen entfernt werden, was in der Praxis durch eine aufwendige Säurewaschung geschieht.

Der Erfindung lag nun die Aufgabe zugrunde, ein Verfahren zur Herstellung von EPO-Partikeln durch Imprägnieren von Polyolefin-Granulat mit einem Treibmittel zu entwickeln, bei dem keine Abwasserbelastung auftritt und eine Säurewaschung der EPO-Schaumpartikel nicht erforderlich ist.

Es wurde gefunden, daß diese Aufgabe gelöst wird, wenn das Suspensionsmediüm eine niedrigere Dichte aufweist als das suspendierte Polyolefin-Granulat.

Gegenstand der Erfindung ist demzufolge ein Verfahren stellung von expandierten Polyolefin - (EPO) - Partikeln durch Imprägnieren von Polyolefin-Granulat mit einem flüchtigen Treibmittel in Suspension unter Druck bei erhöhter Temperatur und anschließendem Entspannen, wobei das Suspensionsmedium eine niedrigere Dichte' aufweist als das suspendierte Polyolefingranulat, und die Suspension praktisch frei von Suspensionsstabilisatoren ist.

Polyolefine im Sinne der vorliegenden Erfindung sind
a) Homopolypropylen,
b) Randomcopolymere des Propylens mit 0,1 bis 15, vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1,
c) Mischungen von a) oder b) mit 0,1 bis 75, vorzugsweise 3 bis 50 Gew.-% eines Polyolefin-Elastomeren, z.B. eines Ethylen/ Propylen-Blockcopolymeren mit 30 bis 70 Gew.-% Propylen,
d) Polyethylen (PE-LLD, -LD, -MD, -HD) oder
e) Mischungen aus den unter a) bis d) genannten Polyolefinen (gegebenenfalls unter Zugabe von Phasenvermittlern).

Der Kristallitschmelzpunkt (DSC-Maximum) der unter a) bis e) auf-gelisteten Polyolefine liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp für Propylenpolymerisate und 190°C, 2,16 kp für Ethylenpolymerisate) nach DIN 53 735 zwischen 0,1 und 100 g/10 min.

Bevorzugte Polyolefine sind Homo- oder Copolymere des Propylens mit bis zu 15 Gew.-% Ethylen und/oder Buten-1, besonders bevorzugt sind Propylen/Ethylen-Copolymere mit 1 bis 5 Gew.-% Ethylen. Sie besitzen eine Schmelztemperatur von 130 bis 160°C, und eine Dichte (bei Raumtemperatur) von etwa 900 g/l.

Bei der Herstellung der EPO-Partikel geht man von Polyolefin-granulat aus, welches vorzugsweise mittlere Durchmesser von 0,2 bis 10, insbesondere 0,5 bis 5 mm aufweist. In einem Rührreaktor werden 100 Gew.-Teile dieses Granulats in vorzugsweise 100 bis 500 Gew.-Teilen Suspensionsmedium dispergiert.

Wesentlich ist, daß das Suspensionsmedium eine niedrigere Dichte aufweist als das Polyolefingranulat. Wasser ist also nicht geeignet.

Geeignete Suspensionsmedien sind organische Flüssigkeiten mit einem Siedepunkt unterhalb von 300°C, vorzugsweise unterhalb von 120°C, sowie deren Mischungen mit Wasser. Um als Suspensionsmedium wirken zu können, dürfen die Flüssigkeiten bzw. die Mischungen mit Wasser das Polyolefingranulat auch bei der Imprägniertemperatur nicht lösen. Bevorzugt sind die Flüssigkeiten mit Wasser mischbar.

Geeignete organische Flüssigkeiten sind Alkohole, insbesondere C₁-C₄-Alkohole, Ketone, Ether, Aldehyde und Ester. Besonders bevorzugt sind Mischungen'aus Ethanol mit 0 bis 50 Gew. -% Wasser. Letzte weisen eine Dichte (bei. Raumtemperatur) zwischen 790 und 910 g/l auf.

Wesentlich ist ferner, daß die Suspension praktisch frei von Suspensionsstabilisatoren ist. Praktisch frei bedeutet, daß irgendwelche Dispergierhilfsmittel, z.B. wasserunlösliche anorganische Verbindungen höchstens in Mengen von weniger als 0,01, vorzugsweise von weniger als. 0,005. Gew.-%, und insbesondere weniger als 0,001 Gew.-%, bezogen auf das Polymergranulat vorhanden sein sollten. Besonders bevorzugt enthält die Suspension überhaupt keine Stabilisatoren.

Als Treibmittel können entweder organische Flüssigkeiten oder anorganische Gase oder Gemische davon eingesetzt werden: Als Flüssigkeiten kommen halogenierte Kohlenwasserstoffe in Frage, bevorzugt sind jedoch gesättigte, aliphatische Kohlenwasserstoffe, insbesondere solche mit 3 bis 8 Kohlenstoffatomen. Besonders bevorzugt ist n-Butan. Geeignete anorganische Gase sind Stickstoff, Luft, Ammoniak und Kohlendioxid.

Das Treibmittel wird in Mengen von vorzugsweise 0,1 bis 60 Gew.-Teilen, insbesondere 3 bis 50 Gew. Teilen, bezogen auf 100 Gew. Teile Polymer, eingesetzt. Die Treibmittelzugabe kann dabei vor oder während des Aufheizens. des Reaktorinhalts erfolgen.

Beim Imprägnieren sollte die Temperatur oberhalb der Erweichungstemperatur des.Polyolefins liegen. Sie kann 40°C unter bis 25°C über der Schmelztemperatur (Kristallitschmelzpunkt) liegen, bevorzugt sollte sie jedoch unterhalb der Schmelztemperatur liegen.

Je nach Menge und Art des Treibmittels sowie nach der Temperatur stellt sich im Reaktor ein Druck ein, der im allgemeinen höher als 2 bar ist und 40 bar nicht übersteigt. Im Falle des bevorzugten Suspensionsmediums Ethanol liegt er zwischen 8. und 30 bar.

Durch die Wahl der Imprägniertemperatur und des Treibmittels kann die Schüttdichte der entstandenen EPO-Partikel gesteuert werden. Nach Erreichen der Entspannungstemperatur wird der Reaktor entspannt, wobei die Entspannung zweckmäßigerweise in einen Zwischenbehälter erfolgt, in dem ein Druck von vorzugsweise 0,5 bis 5 bar herrscht.

Beim Entspannen des Reaktors erfolgt eine Expansion des treibmittelhaltigen Polyolefin-Granulats und es entstehen EPO-Partikel mit einem mittleren Durchmesser von 1 bis 20 mm. Diese Partikel werden dann vom Suspensionsmedium abgetrennt und ohne Nachbehandlung getrocknet.

Die Schüttdichte der EPO-Partikel ist in weiten Grenzen zwischen 10 und 300, vorzugsweise zwischen 15 und 200 g/l einstellbar. Die EPO-Partikel sind überwiegend geschlossenzellig und besitzen eine Zellzahl von 1 bis 5000 Zellen/mm², vorzugsweise 2 bis 3000 Zellen/mm², insbesondere 10 bis 1500 Zellen/mm².

Ein weiterer Vorteil des erfindungsgemäßen Verfahrens ist, daß das Suspensionsmedium frei von Zusatzstoffen ist, so daß es nach dem Abtrennen der EPO-Partikel unmittelbar beim nächsten Imprägnieransatz wieder verwendet werden kann.

### Beispiel 1

In einem geschlossenen Rührreaktor werden 60. Gew.-Teile eines. Propylen-Ethylen-Randomcopolymeren (Dichte 910 g/l) mit einem Ethylengehalt von ca. 2 Gew. -% in einer Mischung, bestehend aus 108 Gew.-Teilen Ethanol und 32 Gew.-Teilen Wasser (Dichte 850 g/l) dispergiert. Nach dem Aufpressen von 10 bar Stickstoff wird der Reaktorinhalt auf 144°C erwärmt. Dabei steigt der Druck im Kessel auf ca. 19 bar an. Anschließend wird der Reaktorinhalt durch ein Bodenventil in einen Zwischenbehälter entspannt. Nach Abdekantieren und Trocknen haben die erhaltenen expandierten Partikel eine Schüttdichte von 183 g/l. Das abgetrennte Suspensions medium wurde in einem nachfolgenden Imprägnieransatz wieder verwendet.

### Beispiel 2

In einem geschlossenen Rührreaktor werden 60 Gew.-Teile eines Propylen-Ethylen-Randomcopolymeren mit einem Ethylengehalt von ca. 2 Gew.-% in einer Mischung bestehend aus 97 Gew.-Teilen Ethanol und 28 Gew.-Teilen Wasser dispergiert. Danach werden 9 Gew.-Teile Butan zugegeben und der Reaktorinhalt auf 135°C erwärmt. Dabei steigt der Druck im Kessel auf ca. 18 bar an. Anschließend wird der Reaktorinhalt durch ein Bodenventil in einen Zwischenbehälter entspannt. Nach Trocknung haben die erhaltenen expandierten Partikel eine Schüttdichte von 87 g/l.

### Beispiel 3

In einem geschlossenen Rührreaktor werden 60 Teile eines Propylen-Ethylen-Copölymeren mit einem Ethylengehalt von 2 % in 130 Teilen Ethanol dispergiert. Nach Zugabe von 19 Teilen Butan wird der Reaktorinhalt auf 130,5°C erwärmt. Dabei steigt der Druck auf 24,3 bar an. Anschließend wird entspannt, abdekantiert und getrocknet. Die erhaltenen Schaumpartikel haben eine Schüttdichtevon 50 g/l.

### Vergleichsbeispiel

Es wurde gearbeitet wie in Beispiel 3, als Suspensionsmedium wurden jedoch 165 Teile Wasser eingesetzt. Der Ansatz koagulierte, es wurden keine separaten Schaumperlen erhalten.

## Patentansprüche

1. Verfahren zur Herstellung von expandierten Poly-olefin-(EPO)-Partikeln durch Imprägnieren von PolyolefinGranulat mit einem flüchtigen Treibmittel in Suspension unter Druck bei erhöhter Temperatur und anschließendem Entspannen, **dadurch gekennzeichnet, daß** das Suspensionsmedium eine niedrigere Dichte aufweist als das suspendierte Polyolefingranulat, und daß die Suspension Suspensionsstabilisatoren höchstens in Mengen von weniger als 0,01 Gew.-%, bezogen auf das Polyolefin-Granulat, enthält.

2. Verfahren nach Anscruch 1, **dadurch gekennzeichnet, daß** das' Polyolefin ein Homo- oder Copolymeres des Propylens mit bis ' zu 15 Gew.-% Ethylen und/oder Buten-1 ist.

3. Verfahren nach Anspruch 1, **dadurch gekennzeichnet, daß** das Suspensionsmedium eine organische Flüssigkeit mit einem Siedepunkt unterhalb von 300°C oder eine Mischung davon mit Wasser ist.

4. Verfahren nach Anspruch 3, **dadurch gekennzeichnet, daß** das Suspensionsmedium Ethanol oder eine Mischung aus Ethanol mit bis zu 50 Gew.-% Wasser ist.

5. Verfahren nach Anspruch 1, **dadurch gekennzeichnet, daß** die Imprägnierung bei Temperaturen oberhalb der Erweichungstemperatur, aber unterhalb der Schmelztemperatur des Polyolefins durchgeführt wird.

6. Verfahren nach Anspruch 1, **dadurch gekennzeichnet, daß** das Treibmittel ein gesättigter, aliphatischer Kohlenwasserstoff mit 3 bis 8 Kohlenstoffatomen ist.

7. Verfahren nach Anspruch 1, **dadurch gekennzeichnet, daß** das Treibmittel Stickstoff, Luft, Ammoniak oder Kohlendioxid, gegebenenfalls im Gemisch mit einem gesättigten, aliphatischen Kohlenwasserstoff mit 3 bis 8 Kohlenstoffatomen ist.

8. Verfahren nach Anspruch 1, **dadurch gekennzeichnet, daß** nach beendeter Imprägnierung und Entspannung die EPO-Partikel vom Suspensionsmedium abgetrennt werden und dieses für einen weiteren Imprägnieransatz verwendet wird.

## Claims

1. A process for producing expanded polyolefin (EPO) particles by impregnating polyolefin granules with a volatile blowing agent in suspension under pressure at elevated temperature and then releasing the pressure, wherein the suspension medium has a lower density than the suspended polyolefin granules and the suspension less than 0.01% by weight of suspension stabilizers, based on the polymer granules.

2. A process as claimed in claim 1, wherein the polyolefin is a homo- or copolymer of propylene with up to 15% by weight of ethylene and/or 1-butene.

3. A process as claimed in claim 1, wherein the suspension medium is an organic liquid having a boiling point below 300°C or a mixture thereof with water.

4. A process as claimed in claim 3, wherein the suspension medium is ethanol or a mixture of ethanol with up to 50% by weight of water.

5. A process as claimed in claim 1, wherein the impregnation is carried out at above the softening point, but below the melting point, of the polyolefin.

6. A process as claimed in claim 1, wherein the blowing agent is a saturated aliphatic hydrocarbon having from 3 to 8 carbon atoms.

7. A process as claimed in claim 1, wherein the blowing agent is nitrogen, air, ammonia or carbon dioxide, if desired in a mixture with a saturated aliphatic hydrocarbon having from 3 to 8 carbon atoms.

8. A process as claimed in claim 1, wherein, after impregnation and pressure release, the EPO particles are separated off from the suspension medium and this is used for a further impregnation batch.

## Revendications

1. Procédé de préparation de particules de polyoléfine expansées (EPO) par imprégnation d'un produit de granulation de polyoléfine par un agent gonflant volatil en suspension, sous pression, à température élevée, et par détente ultérieure, **caractérisé en ce que** le milieu de suspension présente une densité plus basse que le produit de granulation de polyoléfine en suspension et **en ce que** la suspension contient des agents de stabilisation de suspension au maximum en des quantités inférieures à 0,01% en poids, par rapport au produit de granulation de polyoléfine.

2. Procédé suivant la revendication 1, **caractérisé en ce que** la polyoléfine est un homopolymère ou copolymère du propylène présentant jusqu'à 15% en poids d'éthylène et/ou de butène-1.

3. Procédé suivant la revendication 1, **caractérisé en ce que** le milieu de suspension est un liquide organique présentant un point d'ébullition inférieur à 300°C ou un mélange de celui-ci avec de l'eau.

4. Procédé suivant la revendication 3, **caractérisé en ce que** le milieu de suspension est de l'éthanol ou un mélange d'éthanol avec jusqu'à 50% en poids d'eau.

5. Procédé suivant la revendication 1, **caractérisé en ce que** l'imprégnation est effectuée à des températures supérieures à la température de ramollissement de la polyoléfine, mais inférieures à sa température de fusion.

6. Procédé suivant la revendication 1, **caractérisé en ce que** l'agent gonflant est un hydrocarbure aliphatique saturé comportant 3 à 8 atomes de carbone.

7. Procédé suivant la revendication 1, **caractérisé en ce que** l'agent gonflant est de l'azote, de l'air, de l'ammoniac ou du dioxyde de carbone, éventuellement en mélange avec un hydrocarbure aliphatique saturé comportant 3 à 8 atomes de carbone.

8. Procédé suivant la revendication 1, **caractérisé en ce que**, après que l'imprégnation et la détente sont achevées, les particules d'EPO sont séparées du milieu de suspension et **en ce que** ce milieu est utilisé pour une autre masse d'imprégnation.
